(19) **Europäisches Patentamt / European Patent Office / Office européen des brevets**

(11) **EP 4 550 798 A1**

(12) **EUROPEAN PATENT APPLICATION**
published in accordance with Art. 153(4) EPC

(43) Date of publication:
**07.05.2025 Bulletin 2025/19**

(21) Application number: **22949407.5**

(22) Date of filing: **30.06.2022**

(51) International Patent Classification (IPC):
*H04N 21/234* (2011.01)    *H04N 13/00* (2018.01)
*H04N 21/2662* (2011.01)    *H04N 21/431* (2011.01)

(52) Cooperative Patent Classification (CPC):
**H04N 13/00; H04N 21/234; H04N 21/2662;
H04N 21/431**

(86) International application number:
**PCT/JP2022/026211**

(87) International publication number:
**WO 2024/004134 (04.01.2024 Gazette 2024/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Sony Interactive Entertainment Inc.
Tokyo 108-0075 (JP)**

(72) Inventor: **OHBA Akio
Tokyo 108-0075 (JP)**

(74) Representative: **Müller Hoffmann & Partner
Patentanwälte mbB
St.-Martin-Straße 58
81541 München (DE)**

(54) **IMAGE TRANSMISSION DEVICE AND IMAGE TRANSMISSION METHOD**

(57)    An image transmission device sets a curved viewscreen 150 having a center axis along a visual line 162 of a user 160, and changes the density of directions in which color information is acquired in a three-dimensional space to be displayed, according to an angle with respect to the center axis. Accordingly, a source image 152 in which a scale factor of a figure is further amplified when the distance from the figure to the center is shorter is created. A display control section sets a viewscreen 154, and determines pixel values by performing sampling from proper positions in the source image 152. Accordingly, a display image 156 having a distortion corresponding to an eyepiece lens is created.

FIG. 6

EP 4 550 798 A1

**Description**

[Technical Field]

The present invention relates to an image transmission device and an image transmission method for displaying images by data transmission.

[Background Art]

Display devices of UHDTV (Ultra High Definition Television) which have resolution that is 4 or 16 times greater than that of HDTV have been put to practical use. Besides, display systems for giving a sense of immersion by presenting an all-sky video in a free visual field corresponding to the visual line of a user wearing a head mounted display have come into widespread use. With the emergence of 5G (5th generation mobile communication system), wide-band and low-delay data transmission has been accomplished, so that high-quality image content has been enjoyed in any kind of environment.

[Summary]

[Technical Problem]

As mentioned above, in various kinds of electronic content, the resolution and viewing angle of an image and the number of pixels constituting one frame are on the increase. The increase in data amounts, however, brings about many kinds of problems including a strained state of a transmission band, increase in the memory cost and computation cost, and increase in the power consumption. In particular, the frame rate is not increased because a certain length of time is taken to process and transmit one-frame data. Worse than that, the image quality may be deteriorated or a change of the visual field may be delayed with respect to movement of a user visual line, whereby a sense of strangeness can be caused.

The present invention has been made in view of the abovementioned problems, and an object thereof is to provide a technology of displaying a high-resolution image having a wide viewing angle, with high quality and with ease.

[Solution to Problem]

In order to solve the abovementioned problems, a certain aspect of the present invention relates to an image transmission device. The image transmission device transmits, in parallel with displaying, source image data for use in creating a display image, and the image transmission device includes at least one processor having hardware. The at least one processor creates the source image by acquiring color information in each corresponding direction in a space to be displayed and determining values of respective pixels on a viewscreen for the source image in such a way that the color information is acquired after an interval between the directions is so changed as to depend on an angle with respect to a center axis of the viewscreen, and transmits the source image data to a device that creates the display image.

Another aspect of the present invention relates to an image transmission method. The image transmission method is for, in parallel with displaying, transmitting source image data for use in creating a display image, and the method includes creating the source image by acquiring color information in each corresponding direction in a space to be displayed and determining values of respective pixels on a viewscreen for the source image in such a way that the color information is acquired after an interval between the directions is so changed as to depend on an angle with respect to a center axis of the viewscreen, and transmitting the source image data to a device that creates the display image.

It is to be noted that a method, a device, a system, a computer program, a data structure, or a recording medium that is obtained by converting any combination of the above constituent elements or an expression in the present invention is also effective as an aspect of the present invention.

According to the present invention, a high-resolution image having a wide viewing angle can be displayed with high quality and with ease.

[Brief Description of Drawings]

[FIG. 1]

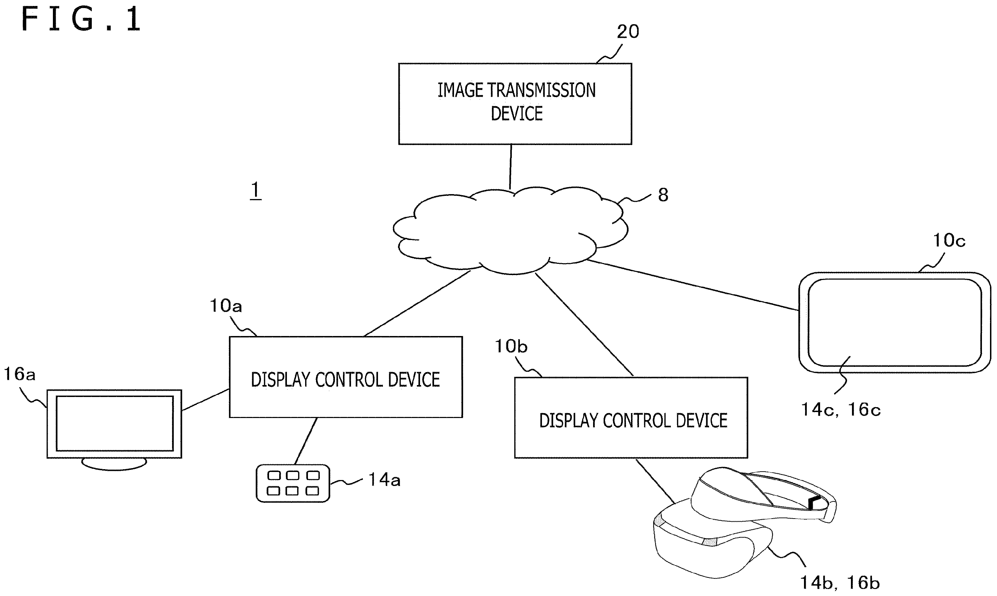

FIG. 1 is a diagram depicting a configuration example of an image display system to which the present embodiment is applicable.
[FIG. 2]

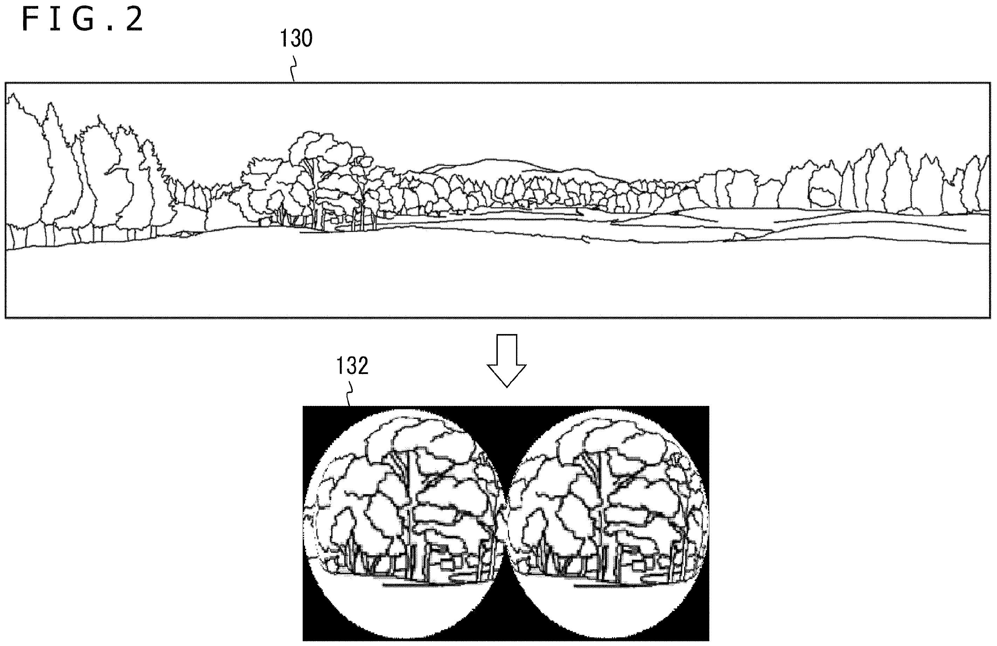

FIG. 2 is a diagram depicting examples of assumed display images in the present embodiment.

[FIG. 3]

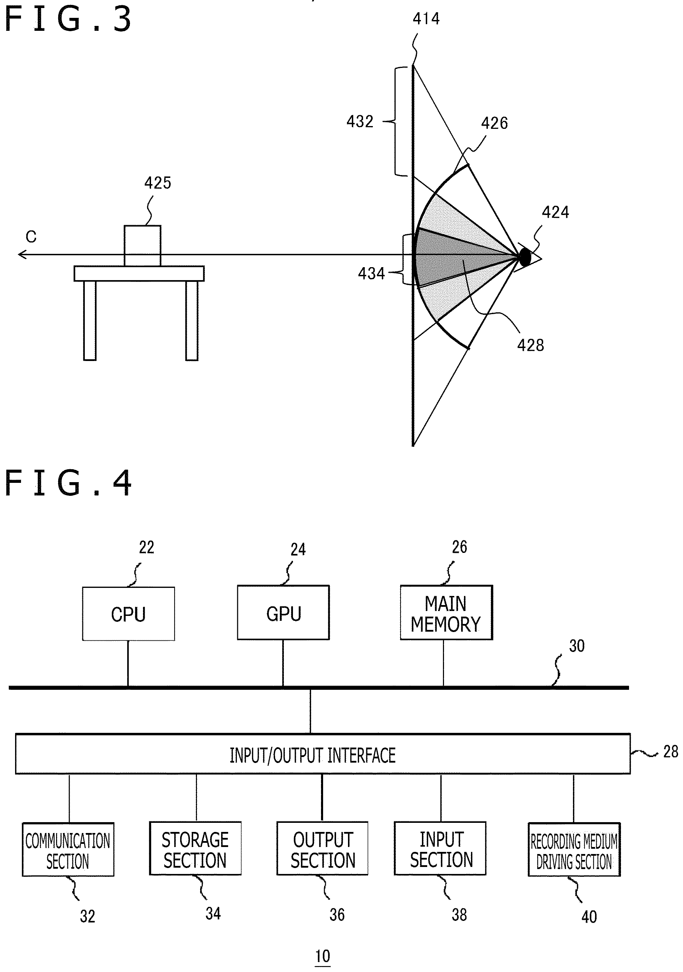

FIG. 3 is a diagram for illustrating distribution of information amounts on an image plane when a distortion image is displayed in the present embodiment.

[FIG. 4]

FIG. 4 is a diagram depicting an internal circuit configuration of a display control device according to the present embodiment.

[FIG. 5]

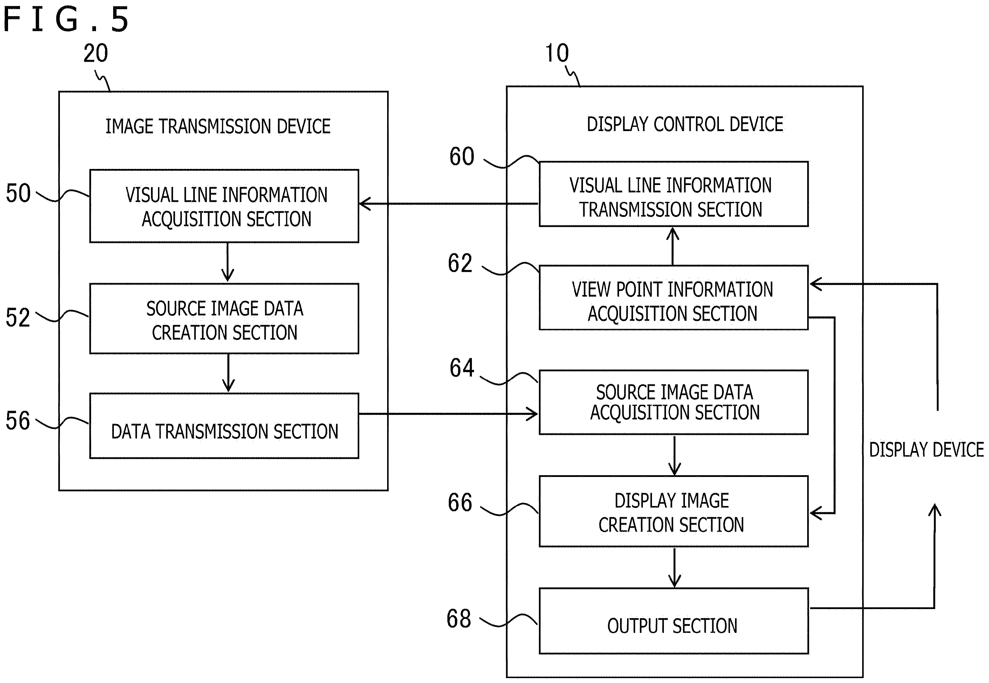

FIG. 5 is a diagram depicting a configuration of functional blocks in an image transmission device and the display control device according to the present embodiment.

[FIG. 6]

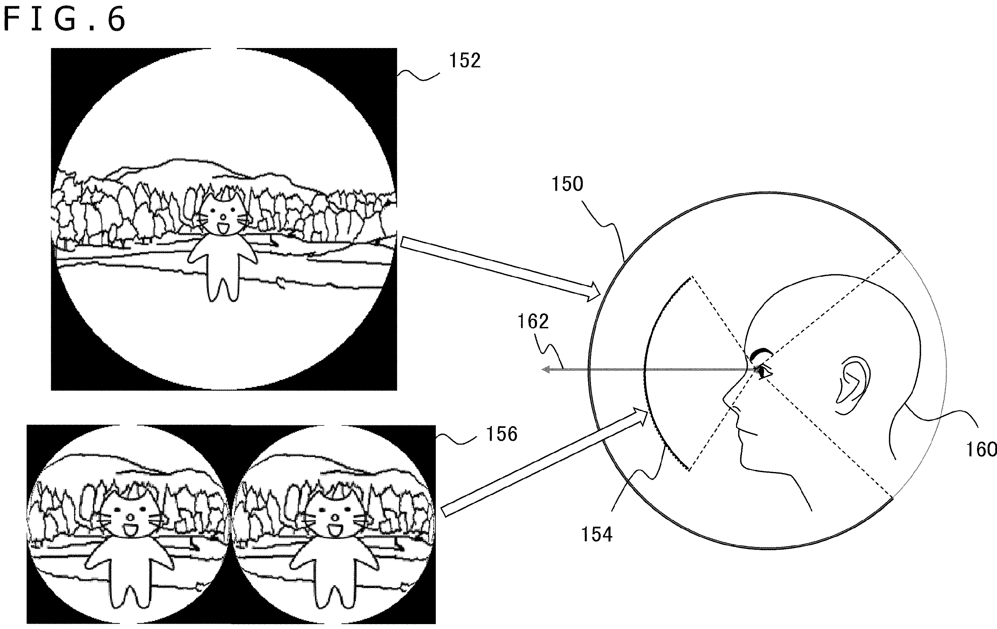

FIG. 6 is a diagram for illustrating a basic process of creating a source image and a display image in the present embodiment.

[FIG. 7]

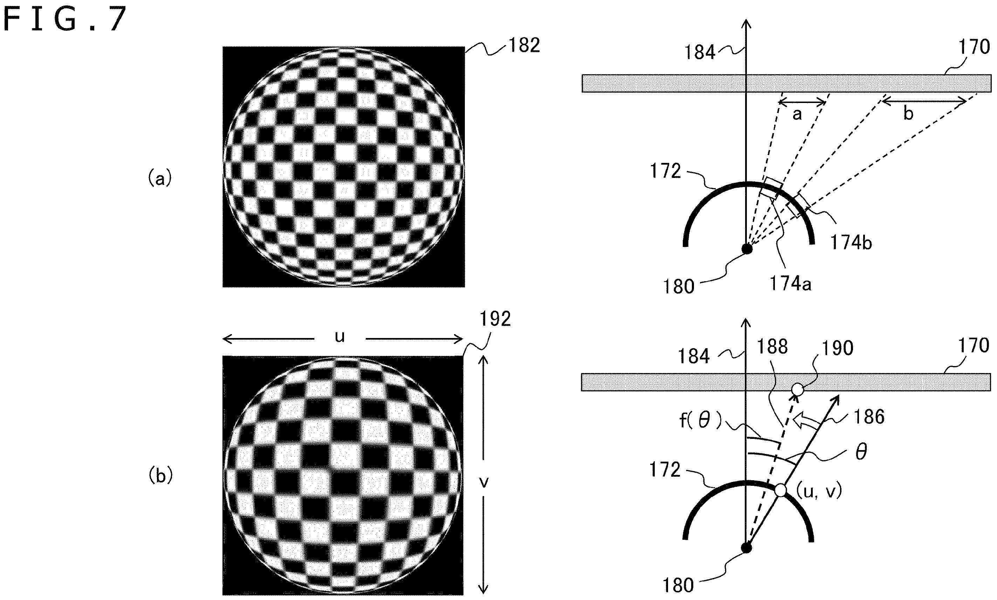

FIG. 7 depicts diagrams for illustrating in detail a source image that is created by the image transmission device according to the present embodiment.

[FIG. 8]

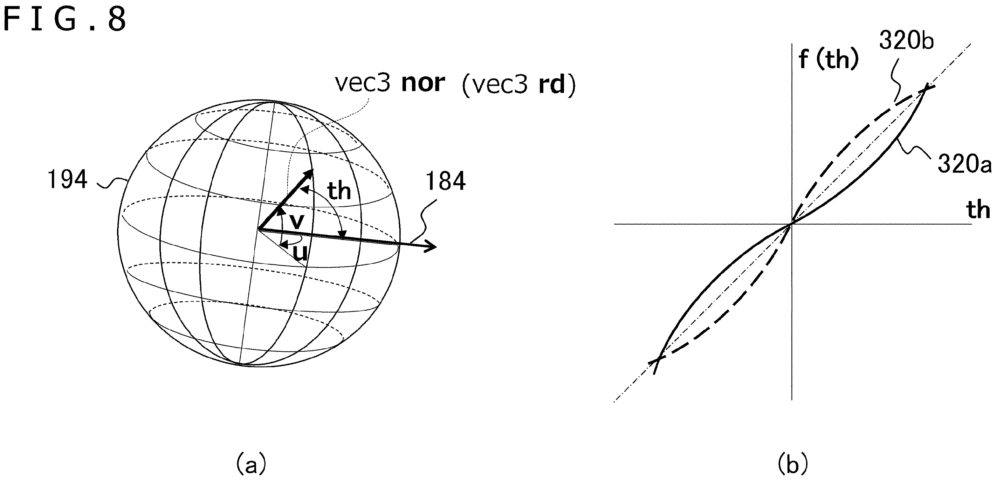

FIG. 8 depicts diagrams for illustrating a source image creating process that is performed by the image transmission device according to the present embodiment.

[FIG. 9]

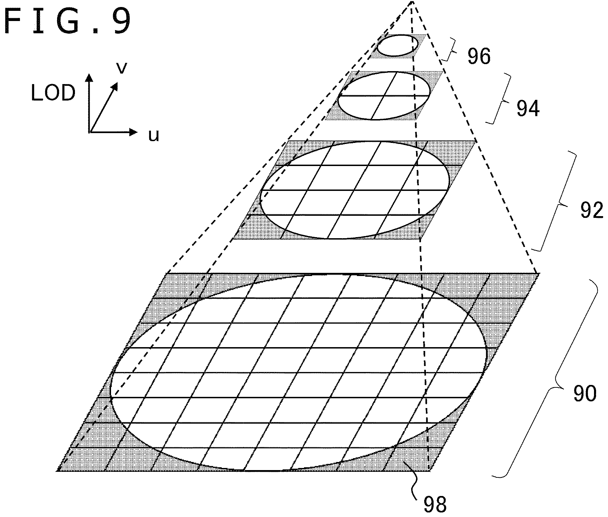

FIG. 9 is a conceptual diagram depicting an example of a source image data structure having a mipmap structure according to the present embodiment.

[FIG. 10]

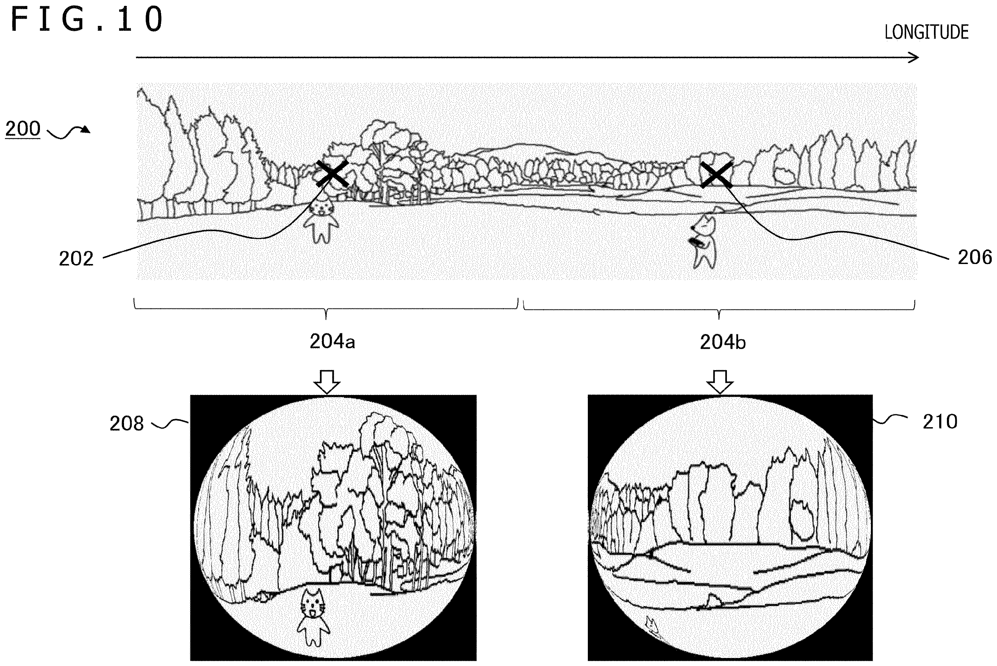

FIG. 10 is a diagram for illustrating a case where source images are two kinds of images for which different center axes are defined in the present embodiment.

[FIG. 11]

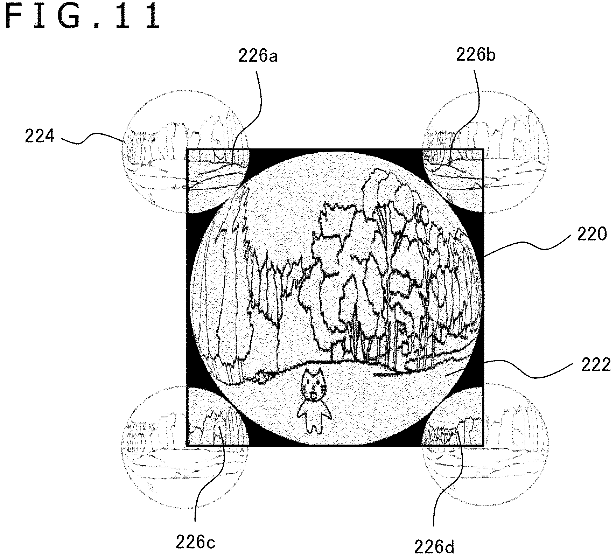

FIG. 11 is a diagram depicting a data structure example of a source image containing two kinds of images for which different center axes are defined in the present embodiment.

[FIG. 12]

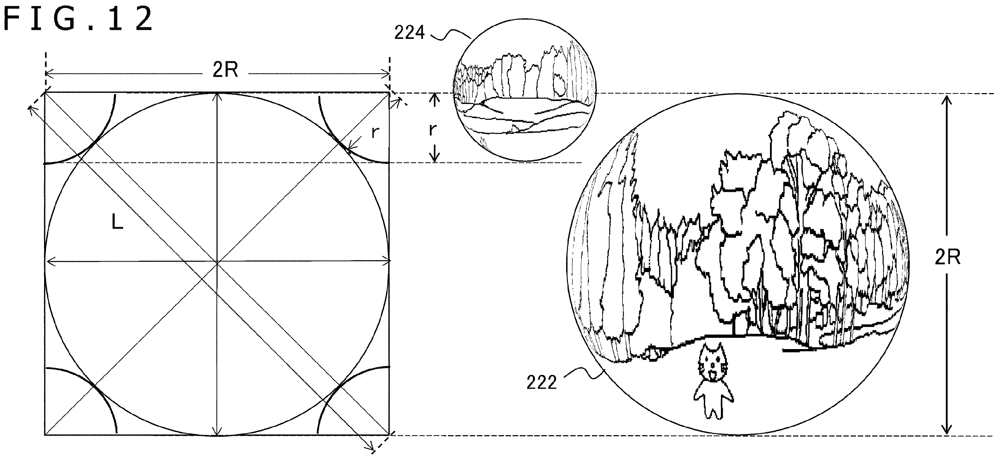

FIG. 12 is a diagram depicting a relation between the size of a main image and the size of a sub-image when source images are created according to the structure in FIG. 11.

[FIG. 13]

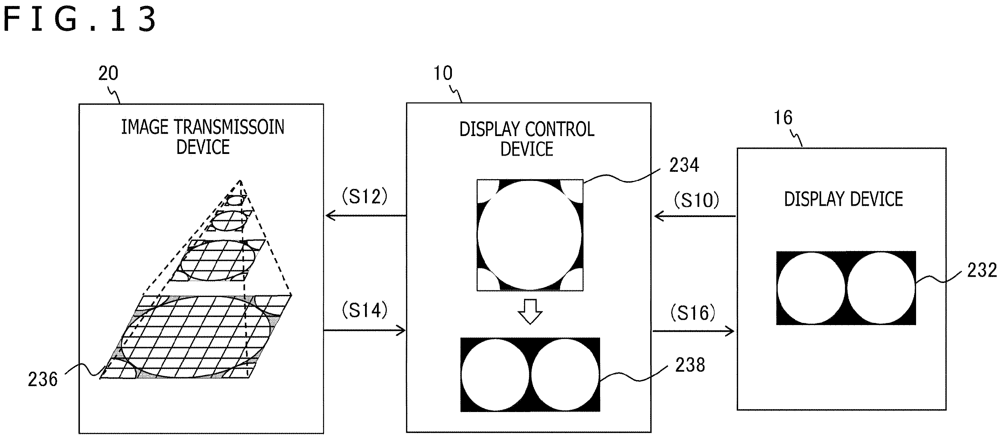

FIG. 13 is a diagram for illustrating a flow of data in the image display system according to the present embodiment.

[Description of Embodiment]

FIG. 1 depicts a configuration example of an image display system to which the present embodiment is applicable. An image display system 1 includes display control devices 10a, 10b, and 10c that display images according to a user operation and an image transmission device 20 that provides image data for use in displaying. Input devices 14a, 14b, and 14c that are provided for user operations and display devices 16a, 16b, and 16c that display images are respectively connected to the display control devices 10a, 10b, and 10c. Between the display control devices 10a, 10b, and 10c and the image transmission device 20, communication can be established over a network 8 such as a WAN (World Area Network) or a LAN (Local Area Network).

Either wired connection or wireless connection can be established between the display control devices 10a, 10b, and 10c and the display devices 16a, 16b, and 16c and the input devices 14a, 14b, and 14c. In another case, two or more of these devices may be integrally formed. For example, the display control device 10b in FIG. 1 is connected to a head mounted display which is the display device 16b. The head mounted display also functions as the input device 14b because the visual field of a display image on the head mounted display can be changed in association with motion of a user wearing the head mounted display.

In addition, the display control device 10c is a mobile terminal, and is formed integrally with the display device 16c and the input device 14c which is a touch pad covering a screen of the display device 16c. Thus, the appearances of the depicted devices and the connection manner among the devices are not limited to any particular kind. Also, the number of the display control devices 10a, 10b, and 10c and the image transmission device 20 to be connected to the network 8 is not limited. For example, the image transmission device 20 may be a cloud server or a content server in a cloud gaming system or the like. Hereinafter, the display control devices 10a, 10b, and 10c may collectively be referred to as a display control device 10, the input devices 14a, 14b, and 14c may collectively be referred to as an input device 14, and the display devices 16a, 16b, and 16c may collectively be referred to as a display device 16.

The input device 14 may be any one of common input devices such as a controller, a keyboard, a mouse, a touch pad, and a joystick, or a combination thereof. The input device 14 supplies contents of a user operation to the display control device 10. The display device 16 may be a common display such as a liquid crystal display, a plasma display, an organic EL (Electroluminescence) display, a wearable display, or a projector. The display device 16 displays an image outputted from the display control device 10.

The image transmission device 20 provides content data which involves image displaying, to the display control device 10. The type of the content is not limited to a particular one, and the content may be an electronic game, an image for viewing, television broadcasting, an electronic meeting, a video chat, or the like. The display control device 10 basically implements a displaying process while acquiring content data for displaying from the image transmission device 20. Alternatively, the image transmission device 20 and the display control device 10 may cooperatively create content data such that loads of rendering processing, etc., are distributed.

FIG. 2 depicts examples of assumed display images in the present embodiment. The image transmission device 20 prepares data regarding a wide angle image 130 on which a space to be displayed is rendered in a wide angle visual field such as an omni-directional visual field. It is to be noted that, when the viewing angle is larger, it is more difficult to present an image world on a plane. Hence, it is necessary, in practice, to indicate the wide angle image 130 on a spherical surface or a polyhedron, or in an equirectangular projection form which has latitude/longitude axes. The display device 16 outputs a display image 132 which is created using a part of data regarding the wide angle image 130 to a display panel. In a case where the display device 16 is a head mounted display, the visual field of the display image 132 is changed in a manner corresponding to movement of the user head.

As in the display image 132, stereoscopic images having parallax are indicated in left and right regions corresponding to the left and right eyes of the user. In this manner, a stereoscopic vision is realized. In addition, in a case where the head mounted display is equipped with an eyepiece lens for enlarging the visual field, an inverse distortion is provided to the display image 132 according to the distortion aberration and the color aberration of the eyepiece lens such that a distortion-free image is visually recognized when viewed through the eyepiece lens. For example, in a case where the lens provides an image having four sides that are recessed in a bobbin-like shape, each of the left and right images in the display image 132 is curved into a barrel shape.

Hereinafter, an image to which a distortion corresponding to the eyepiece lens has been provided is referred to as a "distortion image." A distortion image basically has such a characteristic that a distortion amount of a figure on an image plane is larger when the distance from a position intersecting the optical axis of the eyepiece lens to the figure is longer. It is to be noted that the wide angle image 130 may be an image rendered by computer graphics, a photographed image, or a combination thereof. In addition, the wide angle image 130 may be a still image, or may be a video including still images arranged as time-series frames. For example, an object presented in the wide angle image 130 may move or change according to, for example, an operation performed by a user viewing the display image 132.

The transmission source of data regarding the wide angle image 130 may be the image transmission device 20, or may be a rendering mechanism in the display control device 10, or an image capturing device connected to the display control device 10. The following explanation will be given on the assumption that the transmission source is mainly the image transmission device 20. In any case, when the viewing angle of the wide angle image 130 is adjusted nearly to the omnidirection, a range that the user can look around is widened. Accordingly, a sense of immersion into the image world can be improved. Meanwhile, it is desirable to prepare the wide angle image 130 that has high definition in order to realize a realistic video experience but the data amount is larger when the viewing angle is wider. This leads to an increase in the transmission, storage, and computation costs, and easily causes a delay in displaying.

Therefore, in the present embodiment, ingenuity is exercised on the data format of a source image of the display image 132 such as the wide angle image 130 (hereinafter, referred to as a "source image"), so that low-delay displaying and high-definition visualization of images are simultaneously achieved. Specifically, a distortion similar to that in the display image 132 is provided to the source image in advance. That is, the image transmission device 20 creates a wide-angle distortion image on the assumption that the user visual line direction is an optical axis, and transmits the distortion image to the display control device 10. The display control device 10 creates the display image 132 by using a part of the transmitted data, and outputs the display image 132 to the display device 16.

FIG. 3 is a diagram for illustrating distribution of information amounts on an image plane when a distortion image is displayed. A viewscreen 414 is a screen for presenting a distortion-free and center-projected image, and is used to create an image to be displayed on a common flat display. A viewscreen 426 is a screen for presenting a distortion image designed for an eyepiece lens. FIG. 3 depicts these screens as well as a user view point 424 when viewed from a side.

The viewscreen 414 includes a flat plane having a predetermined viewing angle with respect to a center axis C that is set along a user visual line, for example. In this case, a figure of an object 425 is indicated by being uniformly scaled down by a scale factor depending on not the height from the center axis C but the distance to the viewscreen 414. Meanwhile, the distortion image designed for an eyepiece lens has an equidistant projection property similar to that of an image captured by a fish-eye lens, or a property equivalent thereto, and thus, the viewscreen 426 has a curved shape, as depicted in FIG. 3. It is to be noted that the detailed shape of the viewscreen 426 depends on a lens design, and is not limited to a particular shape in the present embodiment, but the following explanation will be given on the assumption that equidistant projection is mainly performed and the viewscreen 426 is a spherical surface.

As is apparent from FIG. 3, an angle range 428 around the optical axis (center axis C) on the viewscreen 426 has a small difference in areas from a corresponding region on the viewscreen 414, while the area ratio of an angle range farther away from the optical axis is reduced with respect to the viewscreen 414. For this reason, a figure size in the center region 434 of the images is not greatly different between the center projected image and the distortion image, but, regarding figure sizes in peripheral regions 432 and 426, a figure on the center projected image is greatly reduced on the distortion image. That is, the center projected image partially includes unnecessary information that is not reflected in the distortion image.

Such a difference in information amounts with respect to a distortion image is not only exhibited on a center projected image, but also exhibited more prominently on an equirectangular projection image in which a figure is enlarged in each of the upper and lower sides of the image plane. Such being the case, without through an image in a center projection form or in an equirectangular projection form, a source image in a distortion image form is prepared in the present embodiment. As a result, creation/transmission of information that is useless in a distortion image to be finally displayed is avoided as much as possible. As previously described, in a distortion image, a figure scale quantitatively varies depending on the distance from a position intersecting an optical axis. The present embodiment uses this characteristic such that a source image in which, depending on the distance from the position intersecting the center axis C corresponding to the visual line, the figure scale is further changed from that in an equidistant projection image is created.

It has been known as a human being's visual characteristic that the visual function for recognizing fineness is deteriorated with an increase in the distance from a center vision field corresponding to the fovea. Hence, when the center visual field is disposed in the center region 434 of the display image, as depicted in FIG. 3, a high-definition figure is presented in the center region, and the definition is decreased according to an increase in the distance therefrom. Even in this case, the figure can be visually recognized as a high-quality figure. Such being the case, the image transmission device 20 presents a figure, on an image, in a scale distribution for further amplifying the equidistant projection characteristic that the figure scale factor decreases from the position intersecting the center axis C toward a peripheral edge. Accordingly, information amounts are properly distributed to the plane of a source image.

By sampling the source image having undergone the amplification of the in-plane scale distribution, the display control device 10 creates, as a display image, a distortion image having the original scale distribution. Accordingly, a high definition figure can be presented in the center region 434, the data amount in a part of the source image that is less likely to be noticed by the user can be further reduced, and thus, high quality and low delay can be simultaneously obtained. Hereinafter, a position, in a source or display image, intersecting the center axis C or the optical axis of the eyepiece lens is referred to as the "image center."

The abovementioned effects of the present embodiment are exerted more prominently when the image center of a source image is closer to the image center of a display image and the user visual line direction. In a case where the display device 16 is a head mounted display and the visual field changes according to movement of the user head, a change in the user visual line is likely to be reflected in movement of the head. Therefore, the image transmission device 20 constantly acquires, from the display control device 10 or the like, measurement results of the position and posture of the user head, and adaptively determines a direction that the face center faces as an image center of a source image.

Meanwhile, also in a displaying form of determining the visual field regardless of user movement, the user visual line is likely to be concentrated on the center of a display image. In view of this, it is considered that a similar effect can be provided when the image center of a source image is set as the image center of a display image. In this case, according to a display visual field that is determined by the image transmission device 20 itself, or by constantly acquiring a display visual field that is determined by the display control device 10, the image transmission device 20 may determine the center of the display visual field as an image center of a source image. In the following explanation, a case where a display visual field is changed according to movement of a user head will mainly be described.

FIG. 4 is a diagram depicting an internal circuit configuration of the display control device 10. The display control device 10 includes a CPU (central processing unit) 22, a GPU (graphics processing unit) 24, and a main memory 26. These sections are mutually connected via a bus 30. Further, an input/output interface 28 is connected to the bus 30. To the input/output interface 28, a communication section 32 that establishes communication with the image transmission device 20, etc., a storage section 34 such as a hard disk drive or a nonvolatile memory, an output section 36 that outputs data to the display device 16, an input section 38 to which data is inputted from the input device 14 or an image capturing device, and a recording medium driving section 40 that drives a removable recording medium such as a magnetic disk, an optical disk, or a semiconductor memory are connected. The communication section 32 constitutes a USB (Universal Serial Bus) or an IEEE (Institute of Electrical and Electronics Engineering) 1394 interface for peripheral devices, or an interface for wired LAN or wireless LAN networks.

The CPU 22 generally controls the display control device 10 by executing an operating system stored in the storage section 34. Further, the CPU 22 executes a variety of programs which have been read from the removable recording medium and loaded into the main memory 26, or which have been downloaded via the communication section 32. The GPU 24 performs rendering processing in accordance with a rendering command from the CPU 22, and stores a display image in an unillustrated frame buffer. Further, the GPU 24 converts a display image stored in the frame buffer to a video signal, and outputs the video signal to the output section 36. The main memory 26 includes a RAM (Random Access Memory), and is configured to store programs and data that are required for processing. The image transmission device 20 may have almost the same circuit configuration. If so, acquired or created image data is transmitted to the display control device 10 via the communication section 32.

FIG. 5 depicts a configuration of functional blocks in the image transmission device 20 and the display control device 10 according to the present embodiment. In the present embodiment, an entity for creating source image data which is a source of a display image is not limited to the image transmission device 20, and at least a part of the entity may be covered by a display-side local device such as the display control device 10 or the image capturing device. Yet, the following explanation will be given on the assumption that this entity is mainly the image transmission device 20. In addition, an entity of converting the image data into a final display image is not limited to the display control device 10, and at least a part of the entity may be covered by the display device 16. Yet, the following explanation will be given on the assumption that this entity is mainly the display control device 10.

In addition, the image transmission device 20 and the display control device 10 may perform common information processing of, for example, advancing an electronic game or outputting sounds. FIG. 5 is particularly focused on a function of transmitting and displaying image data. The functional blocks depicted in FIG. 5 are implemented by the CPU 22, the GPU 24, the main memory 26, etc., illustrated in FIG. 4 as hardware, and are implemented by a program that has been loaded from a recording medium or the like into the main memory 26 so as to exhibit a data input function, a data saving function, an image processing function, a communication function, etc., as software. Hence, a person skilled in the art will understand that these functional blocks can be implemented in many different ways only by hardware, only by software alone, or by a combination of the two, and that the functional blocks are not limited to a particular one.

The image transmission device 20 includes a visual line information acquisition section 50 that acquires information regarding a user visual line, a source image data creation section 52 that creates source image data, and a data transmission section 56 that transmits source image data to the display control device 10. The visual line information acquisition section 50 acquires, from the display control device 10, information regarding a user visual line direction to an image being displayed on the display device 16, at a predetermined rate. In a case where the display device 16 is a head mounted display and the visual field is changed according to movement of the user head, the visual line information acquisition section 50 acquires, as the visual line information, information regarding the position and posture of the head.

The source image data creation section 52 creates source image data at a predetermined rate. For example, the source image data creation section 52 renders a source image at the predetermined rate by computer graphics in reference to model data or a game program internally stored therein. In this case, from the display control device 10, the source image data creation section 52 may acquire contents of a user operation for a game or the like. Alternatively, by using an image photographed by an image capturing device connected to the image transmission device 20 or a content image that has been prepared separately, for example, the source image data creation section 52 may create a source image.

In either case, the source image data creation section 52 creates a wide-angle distortion image centered at a position corresponding to the user visual line direction. For example, the source image data creation section 52 renders a source image by using a ray tracing technique. Ray tracing is a technique for generating a virtual ray that passes through each pixel on a viewscreen from a view point, and determining a pixel value in reference to color information concerning a point that the ray reaches. Ray tracing is commonly considered as a heavy load process which requires a large amount of computation. However, over rasterization in which polygons are projected, this technique has an advantage that many intermediate buffer memories including a depth buffer are not required.

Further, in recent years, regarding computation amounts and use resources, light-load and low-delay operations can be performed for some kinds of contents of images. One example is ray tracing in which rendering and transmission are performed in units of pixels, and thus, data updating on, for example, a background which does not contribute to improvement of the image quality is performed at a minimum necessary level, whereby loads of performing rendering and transmission can also be reduced.

Alternatively, the source image data creation section 52 may render a source image by a software rasterizer. The software rasterizer is a technology of realizing, in software, rasterization which is a process of projecting a three-dimensional model to create an image (for example, see Tobais Ritschel and two others, "Perceptual rasterization for head-mounted display image synthesis", ACM, January 2019, Transactions on Graphics, Vol. 38, No. 4, Article 97). Polygons which are minimum units sectioned by the software rasterizer are projected, whereby pixel unit-based rendering can be performed without passing through an intermediate buffer, in the same manner as in ray tracing.

In either case, by setting a curved viewscreen such as the viewscreen 426 in FIG. 3 at a wide viewing angle, the source image data creation section 52 according to the present embodiment directly renders a distorted source image. In this process, color information concerning objects that are, in a three-dimensional space to be displayed, in directions at equal intervals from the view point should be acquired under ordinary circumstances, but the source image data creation section 52 performs control to vary the intervals between the directions in which color information is acquired, depending on an angle from the center axis. Accordingly, a figure having undergone suitable adjustment of a scale distribution of equidistant projection figures is obtained on the source image.

The source image data creation section 52 creates source images at a predetermined rate while changing the center axis or the image center, as appropriate, in reference to the visual line information acquired by the visual line information acquisition section 50. Accordingly, an image in which a figure closer to the image center is always further enlarged even when the visual field changes can constantly be created. It is to be noted that, to fix the visual field of a display image regardless of user movement, or to change the visual filed of a display image according to requirements of a program such as a game, the source image data creation section 52 may create a source image having an image center on the center of the visual field. In this case, the function of the visual line information acquisition section 50 may be omitted.

The data transmission section 56 transmits source image data to the display control device 10 at a predetermined rate. The source image transmission rate may be equal to a display frame rate at the display device 16, or may be lower than the display frame rate. Further, the source image data creation section 52 may create mipmap structure data in which a source image is expressed with multiple resolutions to form layers, which will be explained later. In this case, in response to a request from the display control device 10, the data transmission section 56 may select and transmit a source image in a layer that is necessary to create a display image. Moreover, in response to a request from the display control device 10, the data transmission section 56 may select and transmit only a partial region of a source image in a certain layer.

The display control device 10 includes a visual line information transmission section 60 that transmits information regarding a user visual line, a view point information acquisition section 62 that acquires information concerning a user view point or a user visual line, a source image data acquisition section 64 that acquires source image data from the image transmission device 20, a display image creation section 66 that creates a display image by using source image data, and an output section 68 that outputs display image data. The visual line information transmission section 60 transmits information regarding a user visual line direction to the image transmission device 20 at a predetermined rate.

The view point information acquisition section 62 identifies the position of the user view point and the direction of the user visual line at a predetermined rate. For example, in a case where the display device 16 is a head mounted display, at least either a motion sensor or a camera for imaging a surrounding space is mounted on the head mounted display. The view point information acquisition section 62 acquires, from the display device 16, a measurement value obtained by the motion sensor and data concerning the image captured by the camera, and obtains the position and posture of the head mounted display or the user head in reference to the acquired value and data.

Subsequently, the view point information acquisition section 62 creates view point and visual line information at a prescribed rate by setting the position of the face as the position of the view point and setting the direction of the face as the direction of the visual line. In the information, at least the visual line information is transmitted to the image transmission device 20 via the visual line information transmission section 60. It is to be noted that a variety of techniques have practically been used to acquire user view point and visual line information, and any one of them can be adopted in the present embodiment.

The source image data acquisition section 64 acquires, from the image transmission device 20, data concerning a distorted source image at a predetermined rate. By using the source image data, the display image creation section 66 creates a display image at a display frame rate. For example, the display image creation section 66 renders a display image by using a ray tracing technique. That is, the display image creation section 66 puts a viewscreen and a source image in a virtual space, and generates rays that pass through each pixel on the viewscreen from the user view point. Then, by sampling the pixel values at reach points on the source image, the display image creation section 66 determines pixel values on the display image.

Also in this case, the viewscreen 426 which is curved as depicted in FIG. 3 is used, but has a viewing angle narrower than that of a viewscreen for creating a source image. In addition, the display image creation section 66 sets a viewscreen on the basis of the latest view point and visual line information acquired by the view point information acquisition section 62. As a result, when the user visual line changes in a period from creation of a source image to creation of a display image, the image center is shifted from that in the source image. However, a shift amount of the image center in a very short period of time is limited. Therefore, an effect that the display image having a high-definition center region can be created while a data amount is reduced is sufficiently provided.

The display image creation section 66 sets a viewscreen based on the latest view point and visual line information and creates a display image immediately before displaying, so that a change in the visual field is guaranteed with low delay from movement of the user head. Accordingly, even when the creation and transmission rates of source images are made lower than the display frame rate by a certain degree as described above, the influence on the user visual recognition can be minimized, and also, the amount of data to be transmitted from the image transmission device 20 can be further reduced.

The display image creation section 66 adjusts a sampling direction of each pixel on a viewscreen of a display image in such a manner as to be opposite to a reference direction adjusted when the source image data creation section 52 creates the source image. Accordingly, the display image creation section 66 can create a primary image of equidistant projection in which color information concerning objects present in directions at equal intervals from the view point in a three-dimensional space to be displayed is expressed. To realize a stereoscopic vision, the display image creation section 66 sets left and right view points for a source image, and creates respective display images for a left eye and a right eye.

The output section 68 sequentially outputs display image data created by the display image creation section 66 to the display device 16 to display the display image data. It is to be noted that the display device 16 may further adjust the visual field of a display image according to the latest information on the position and posture of the user head. In addition, the display image creation section 66 or the display device 16 may correct an image distortion for each primary color according to the color aberration of the eyepiece lens.

FIG. 6 is a diagram for illustrating a basic process of creating a source image and a display image in the present embodiment. FIG. 6 indicates a schematic view of a source image 152 and a display image 156, and further, indicates a side view of a viewscreen 150 for the source image 152 and a viewscreen 154 for the display image 156, which are set for a visual line 162 of a user 160. In this example, the image transmission device 20 sets the direction of the visual line 162 as the center, sets the viewscreen 150 to have a wide angle, e.g., 220°, and then, creates the source image 152. It is preferable that the viewscreen 150 for a source image have a curved shape corresponding to the viewscreen 154 for a display image, or corresponding to the eyepiece lens.

For example, when the viewscreen 154 for a display image has a spherical surface, the viewscreen 150 for a source image is also set to a spherical surface. However, even if there are some differences in the shapes, the effects of the present embodiment can be obtained. When the viewscreen 150 is formed into a curved shape such as a spherical shape, a figure of an object that is present at substantially the same distance on the axis of the visual line 162 is scaled down further in the source image 152 with an increase in the distance from the image center. Such a variation in the degree of downscaling is referred to as "scale distribution" in the present embodiment. The display control device 10 sets the direction of the visual line 162 as the center, sets the viewscreen 154 to have a viewing angle that is displayable on the head mounted display, and then, creates the display image 156.

That is, the display image 156 indicates a region of a part of the source image 152. To realize a stereoscopic vision, the display control device 10 creates the display image 156 by creating images having parallax by setting respective viewscreens for the view point of a left eye and the view point of a right eye, and then, arranging the images side by side in the left-right direction. The image center of the source image 152 is set to be substantially identical to the center of the left and right images of the display image 156. Accordingly, a source image that matches an in-plane distribution of amounts of information provided by displaying can be created and transmitted, so that the cost for the processing and transmission can be reduced. In addition, in the display control device 10, a time required to access a storage region or a memory for storing data regarding source images can be saved.

It is to be noted that, in FIG. 6, the viewscreen 150 for a source image and the viewscreen 154 for a display image are set according to the common visual line 162. Alternatively, the image centers may be deviated from each other as a result of adjustment to the latest visual line direction at setting times of the respective viewscreens. Accordingly, it is guaranteed that the visual field of the display image follows movement of the head with low delay, as previously explained.

FIG. 7 depicts diagrams for illustrating in detail a source image that is created by the image transmission device 20. In FIG. 7, (a) depicts an image 182 in which a flat plate having a checkered pattern is indicated by equidistant projection, and (b) depicts a source image 192 that is created by the image transmission device 20. On the right side of each of (a) and (b), the positional relation between a view point 180, a viewscreen 172, and a display target flat plate 170 is depicted in a horizontal cross section. In a case where pixels are arranged at equal intervals on the plane of the viewscreen 172, a range on the flat plate 170 presented by one pixel varies on the plane, as described so far.

In (a), for example, widths "a" and "b" of regions of the flat plate 170 that are represented on regions 174a and 174b of the same size on the viewscreen 172 are set to a < b. The width at the longer distance from the center axis 184 is wider. As a result, on the image 182 obtained using the viewscreen 172, a figure at a longer distance from the image center is further scaled down. The scale distribution is so controlled as to further amplify this characteristic in the present embodiment. Specifically, as depicted in the right side of (b), to designate a pixel in position coordinates $(u, v)$ on the viewscreen 172 which is an image plane, an angle $\theta$ formed between the center axis 184 and a three-dimensional vector 186 passing through the position coordinates $(u, v)$ from the view point 180 is converted by a predetermined function $f(\theta)$ to generate a pseudo vector 188.

Further, the pixel value at the position coordinates $(u, v)$ is determined with use of color information at a destination 190 of the pseudo vector 188. Since the angle of the pseudo vector is controlled depending on the original angle $\theta$, the density of positions (directions), on an object such as the flat plate 170 indicated by pixels can be variously changed even if the pixels are arranged at an equal interval on the viewscreen 172. In particular, color information at a position closer to the center axis 184 (the angle from the center axis 184 is smaller) is acquired at a higher density, in the present embodiment. Accordingly, a source image 192 in (b) in which the scale factor of a figure at the image center is larger than that in the image 182 can be created.

FIG. 8 depicts diagrams for illustrating a source image creating process that is performed by the image transmission device 20. As depicted in (a) of FIG. 8, the image transmission device 20 sets a viewscreen in a predetermined angle range, of a surface of a sphere 194 centered at a view point, centered at a position intersecting a center axis 184 corresponding to a user visual line direction. Position coordinates (u, v) on the viewscreen represent a longitude and a latitude based on the center axis 184. In the present embodiment, a pseudo three-dimensional vector rd for determining a pixel at the position coordinates (u, v) is, for example, obtained as follows.

[Math. 1]

```
vec3 Fish_Eye_Distortion(vec2 uv,){
        float fcl= 220.0*PI/(2.0*180.0);
        vec2 rvector  = uv;
        vec3 sd = normalize( vec3(rvector, 1.0) );
        vec3 sz =  vec3(0, 0, 1.0);
        vec3 va =  normalize(cross(sd,sz));
        vec3 vs =  normalize(cross(sz,va));
        float th =   length(rvector)/fcl;
        th = f(th);
        vec3 rd =   cos(th)*sz+sin(th)*vs;
        return rd ;
    }
```

In Expression 1, a viewing angle of the viewscreen is set to 220°. Further, the angle th is obtained by normalizing the angle θ which is formed between the three-dimensional vector 186 in (b) of FIG. 7 (the three-dimensional vector rd in FIG. 8) corresponding to the position coordinates (u, v) and the center axis 184 with respect to the viewing angle of the viewscreen. The function f(th) generates a pseudo vector from the angle th, and is, for example, defined as follows.

[Math. 2]

$$ f(th) = \pm \frac{(|th| + a)^d - a^d}{(1 + a)^d - a^d} $$

The function f(th) is 1 when th = 0 which indicates the image center and when th = ±1 which indicates ends of the viewscreen. In addition, if the parameters "a" and "d" are properly defined, the rate of change with respect to th can be controlled. For example, as indicated by a solid line 320a in (b) of FIG. 8, the rate of change with respect to "th" is lowered toward the center axis. Accordingly, a figure at a shorter distance from the image center on a source image can be expressed with higher resolution, and thus, the source image 192 of which the center portion is further enlarged, as depicted in (b) of FIG. 7, can be created. In contrast, in a case where the display control device 10 creates a display image, a three-dimensional vector nor that refers to the source image is associated with the position coordinates (u, v) on the viewscreen for the display image, by the following operation, for example.

[Math. 3]

```
vec4 texture_theta_220(sampler2D tex, vec3 nor)  {
    float offset_x = 0.0;
    float  fcl = 180.0/(PI*220.0);
    float th =acos(nor.z);    nor.y = -nor.y; nor.x = -nor.x;
    th = f(th);
    float rr  = fcl*th/(sin(th));
    th=acos(0)=PI/2.0; sin(PI/2.0) = 1.0;
    vec2 uv = vec2(nor.x/aspect_f, nor.y)*rr;
    uv = uv-vec2(offset_x, 0.5);
    return texture2d(tex, uv, LODBIAS);
}
```

As indicated by a broken line 320b in (b) of FIG. **8,** the function f(th) here is an inverse function of the solid line 320a which is used to create the source image. Therefore, an image in which the figure scale distribution is emphasized can be converted into an original image of equidistant projection. Through this conversion of the three-dimensional vector, a region corresponding to a fovea can be expressed with higher precision while an information amount of a figure close to a peripheral edge is reduced. It is to be noted that, in the above operation, data reading according to the mipmap structure is conducted with a "LODBIAS" parameter. However, the present embodiment is not intended to be limited to this.

FIG. 9 is a conceptual diagram depicting an example of a source image data structure having a mipmap structure. In this example, source image data has a layered structure consisting of a 0-th layer 90, a first layer 92, a second layer 94, and a third layer 96, which are layers representing the levels of detail (LOD). It is to be noted that only four layers are depicted in FIG. 9, but the number of layers is not limited to four. In addition, the source image data in FIG. 9 has a quad-tree layered structure, and each layer of the structure includes one or more tile regions 98. The tile regions 98 are all formed into the same size having the same number of pixels.

By the method described so far, the image transmission device 20 directly renders a source image which is based on equidistant projection and has undergone adjustment of scales. Further, this source image is scaled down by multiple steps, whereby data having a mipmap structure as depicted in FIG. 9 is created. Layers of the source image for use in creating a display image are properly switched according to the position of the view point, whereby an amount of data to be processed can be optimized. Thus, a high-quality image can be visually recognized while the cost for transmission, processing, and storage regions is suppressed.

In a case where the display device 16 is a head mounted display, the image transmission device 20 determines the center of a source image according to movement of a user head, and creates source image data having a structure such as that depicted in FIG. 9. The display control device 10 obtains a level of detail required for display according to the distance to the view point or the like, and issues a request for transmission of a source image having the obtained level of detail from the image transmission device 20. Further, the display control device 10 may predict a level of detail that will be required thereafter according to the movement history of the view point, and may issue a request for transmission of data in the corresponding layer from the image transmission device 20.

Further, the display control device 10 may issue a request for data concerning the entire source image region in a layer that is necessary or predicted to be necessary, or may issue a request for data concerning a partial region in units of tiles based on the uv coordinates. In this manner, data that is required to create a display image is precisely narrowed down in view of the movement of the view point. Accordingly, optimization of the processing loads and improvement of the quality of the display image can be achieved simultaneously.

The abovementioned examples are based on the assumption that a source image is so prepared as to have a center axis corresponding to the user visual line. However, a source image having a center axis in a different direction may additionally be prepared. FIG. 10 is a diagram for illustrating a case where source images are two kinds of images for which different central axes are defined. The upper side conceptually depicts a whole-sky space 200 to be displayed. The transverse direction corresponds to a longitude. When the user visual line is directed to a direction 202 in the space 200, the image transmission device 20 creates a source image 208 of a wide-angle region 204a centered at the direction 202, in the abovementioned manner.

In this case, the image transmission device 20 additionally creates a source image 210 of a wide-angle region 204b centered at a direction 206 opposite to the user visual line. It is to be noted that the region 204a and the region 204b may partially overlap each other. In addition, the center axes of the two source images are not necessarily opposite to each other. In either way, a source image that presents the space of the same time and has a center axis different from the visual line direction is additionally prepared, so that the range of an image world covered by the source images can be widened. Accordingly, even in a case where the user visual line abruptly changes and an object outside the visual field of the source image 208 is added to the display visual field, or even in a case where transmission data is lost due to a communication congestion, the possibility that a defect is caused in a display image due to data shortage, or that time is taken to conduct displaying is reduced.

In addition, even in a period during which a display image using the source image 208 is successfully created, information regarding an object behind the user is required in some cases. For example, in a case where a mirror is included in the visual field of the display image, the degree of reflection of an object behind the user varies depending on the visual line. Further, depending on the relation between an object behind the user and a light source or the visual line, reflection light or shadow of an object within the visual field can vary. To accurately express such a detailed physical phenomenon by a ray tracing technique or the like, it is effective to create and transmit, as a source image, an image of the back side. Hereinafter, the source image 208 having a center at the user visual line direction is referred to as a "main image," and the source image 210 having a center at a direction different from the user visual line direction is referred to as a "sub-image."

FIG. 11 depicts a structure example of source image data including two kinds of images having different center axes. In the present embodiment, in a main image, a figure at a longer distance from the center is further scaled down, as described so far. Accordingly, a figure closer to a peripheral edge of a display image is expressed at a lower resolution. This is suitable for the human being's visual characteristic that the visual function is deteriorated at a distance from the center visual field. This discussion is further developed. A sub-image is less likely to be instantly captured by the fovea, and thus, even if a sub-image with a generally low scale factor is prepared, the influence of the sub-image on visual recognition is expected to be low.

Such being the case, the image transmission device 20 according to the present embodiment sets the size, or the resolution, of a sub-image to be smaller than that of a main image, and disposes the sub-image in a vacant region, on a rectangular image plane, where the main image is not present. In the example in FIG. 11, source image data 220 is obtained by arranging four sub-images (e.g., sub-images 224) to adjoin a main image 222 and to have respective centers at four vertexes of a circumscribed rectangle (square) of the main image 222, and then, by extracting only a region inside the rectangle.

For easy understanding, regions of the sub-images to be excluded by the extraction are indicated on a gray scale in FIG. 11. As a result, among four regions (partial images) obtained by dividing a sub-image into two parts in a longitudinal direction and dividing each of the parts into two parts in a lateral direction, a lower right region 226a, a lower left region 226b, an upper right region 226c, and an upper left region 226d are stored in vacant regions at four corners (upper left, upper right, lower left, and lower right) of the rectangular region of the source image data 220. Accordingly, data concerning the sub-images can be included in the rectangular region which has the same size as that when only the main image is used as a source image. Thus, the cost for transmission and the storage regions can be reduced.

FIG. 12 depicts the relationship between the size of a main image and the size of a sub-image in a case where source images are created according to the structure in FIG. 11. In a case where sub-images are indicated in regions which are vacant when only the main image is used as a source image, as depicted in FIG. 11, the size of the sub-images is uniquely determined according to the size of the main image. That is, as depicted on the left side in FIG. 12, when a radius of the main image is R, the rectangle region of source images is a square each side of which has a length of 2R. Hence, a radius r of the sub-image is determined as follows:

$$r = (L-2R)/2$$

$$= R(2^{1/2}-1)$$

That is, when the radius r of the sub-image 224 is approximately 0.41 times larger than the radius R of the main image 222, the sub-image also can be transmitted and stored without requiring a change in the source image size. At this scale factor, sufficient effects of avoiding a display loss or expressing reflections are still provided. It is to be noted that the image transmission device 20 may reduce, in multiple steps, source image data having a structure such as that in FIG. 12 to obtain a layered structure such as that depicted in FIG. 9. In this case, the resolution of the sub-image is optimized in association with layer switching for the main image, whereby requesting data and controlling the sizes can easily be performed, compared to a case where respective layered structures are prepared for the main image and the sub-image.

In addition, a region that needs fineness according to the user fovea is included in the main image. Hence, the image transmission device 20 may create, as the sub-image, a distortion image that is not subjected to adjustment of the scale distribution and that corresponds to the eyepiece lens. Also, the image transmission device 20 may create, as the main image, a distortion image that is not subjected to adjustment of the scale distribution. Also in this case, the size of the main image is set to be different from the size of the sub-image, and the images are put in one rectangular region. Accordingly, an effect that source images of a wide viewing angle can be transmitted and stored without increased data is obtained. As a matter of course, if the scale distribution in the main image is adjusted in the abovementioned manner, an effect that the data amount can be reduced while a region corresponding to the fovea is presented with higher precision can additionally be obtained.

FIG. 13 is a diagram for illustrating a flow of data in the image display system according to the present embodiment. A display image 232 created in the previous time step is displayed on the display device 16. The display device 16 transmits measurement data for deriving the position and posture of the head of a user who is viewing the display device 16 to the display control device 10 (S10). The display control device 10 identifies the position and the posture of the head in reference to the measurement data, and transmits, as a visual line direction, a direction to which the face faces, for example, to the image transmission device 20 (S12).

The image transmission device 20 sets a curved viewscreen centered at the transmitted visual line direction, and creates a source image (main image) thereon. When doing so, the image transmission device 20 may make a further adjustment on an in-plane scale distribution which is originally obtained by the curved viewscreen, and distribute the information amounts properly. Further, the image transmission device 20 may set a curved viewscreen centered at a direction different from the visual line direction, and create a sub-image thereon. Moreover, by scaling down the created source image by multiple steps, the image transmission device 20 may create source image data 236 including multiple layers.

The image transmission device 20 transmits data regarding the source image thus created to the display control device 10 (S14). In a case where the source image is layered data, the image transmission device 20 may transmit only a part of the data in response to a request of the display control device 10. The display control device 10 temporarily stores the transmitted data regarding the source image 234 in a storage region such as the main memory 26, and creates a display image 238 by using the data regarding the source image 234. Specifically, the display control device 10 first identifies the position of the view point and the direction of the visual line in reference to the latest information regarding the position and posture of the user head as of a creation time point. Then, a curved viewscreen corresponding to the view point and the visual line is set, and sampling the source image 234 is performed, whereby the values of the respective pixels in the display image 238 are determined.

In a case where the source image 234 has undergone adjustment of the scale distribution, the display control device 10 makes an inverse adjustment to create a distorted image having the original scale distribution. Subsequently, the display control device 10 outputs data regarding the created display image 238 to the display device 16 (S16). The display device 16 corrects the transmitted data regarding the display image, as appropriate, and outputs the display image on a display panel. For example, the display device 16 may further adjust the visual field of the display image 238 according to the position and the posture of the user head immediately before an output, and adopt the adjusted image as the final display image 232.

In this case, the display control device 10 may indicate the display image 238 of a viewing angle wider than that of the visual field to be actually displayed, in order to allow correction to the visual field. In the abovementioned flow of data, the frequencies of transmission and output of the data may be fixed, or may partially have variations. For example, the transmission rate of the source image data in S14 may be lower than the output rate of the display image data in S16, as previously described. In this case, in a period in which no source image data is transmitted, display images of several frames, for example, are created in a data cycle between the display device 16 and the display control device 10. Accordingly, display images can be created at high speed while source image data is created with high-quality.

According to the abovementioned present embodiment, in the system for displaying an image with use of source image data transmitted from the image transmission device, the image transmission device creates and transmits a source image having a distortion that is similar to a distortion to be given to a display image according to the eyepiece lens. When doing so, the image transmission device adjusts an in-plane scale distribution on the source image so that color information of a higher density is presented in a center region corresponding to a user visual line. Since a distortion image corresponding to the eyepiece lens fundamentally has such a characteristic that a figure closer to the center is further enlarged, the above adjustment can easily be made.

Accordingly, in the display image having the original scale distribution restored, a high resolution figure can be presented in a region corresponding to the fovea which is likely to recognize fineness. The image quality for visual recognition can be enhanced. In contrast, in a peripheral portion where a low resolution is unlikely to be noticed by the user, the data amount can be saved. The total data size of the source image can be reduced, and thus, the transmission band, the processing loads, and the storage regions can be saved. As a result, improved image quality and low delay are easily achieved simultaneously.

Further, in addition to a source image in the user visual line direction, a smaller source image in a different direction is created, and these images are put in one rectangular region to form source image data. As previously explained, when a source image is a distortion image, the outline thereof is a curved line, and vacant regions are generated in principle on an orthogonal system plane. Accordingly, a source image in a different direction can be added.

As a result, while an increase in the data size or the storage region is not caused, a source image covering a whole sky can be prepared, a defect in a display image can be prevented, and the effect of light on an object on the back side can be expressed. Thus, a more realistic image world can be offered. In addition, since the difference in resolution between the two kinds of source images is properly defined, the transmission or reference process is facilitated, compared to a case where data regarding the two kinds of source images is created independently from each other.

The present invention has been explained above in reference to the embodiment. The embodiment exemplifies the present invention but a person skilled in the art will understand that various modifications can be made to a combination of the constituent elements or the process steps of the embodiment and that these modifications are also within the scope of the present invention.

[Reference Signs List]

10: Display control device
16: Display device
20: Image transmission device
22: CPU
24: GPU
26: Main memory
32: Communication section
34: Storage section
50: Visual line information acquisition section
52: Source image data creation section
56: Data transmission section
60: Visual line information transmission section
62: View point information acquisition section 62
64: Source image data acquisition section
66: Display image creation section
68: Output section

[Industrial Applicability]

As explained so far, the present invention is applicable to a variety of information processing devices including content servers, game devices, head mounted displays, display devices, mobile terminals, and personal computers, and image display systems including any one of these devices.

**Claims**

1. An image transmission device that, in parallel with displaying, transmits source image data for use in creating a display image, the image transmission device comprising:

   at least one processor having hardware, wherein
   the at least one processor
   creates the source image by acquiring color information in each corresponding direction in a space to be displayed and determining values of respective pixels on a viewscreen for the source image in such a way that the color information is acquired after an interval between the directions is so changed as to depend on an angle with respect to a center axis of the viewscreen, and
   transmits the source image data to a device that creates the display image.

2. The image transmission device according to claim 1, wherein

the at least one processor
acquires information regarding a user visual line, and
sets the viewscreen having the center axis corresponding to the visual line, and changes the viewscreen according to change in the visual line.

3. The image transmission device according to claim 1, wherein

the at least one processor
transmits the source image data to the device that creates the display image to be outputted to a display device equipped with an eyepiece lens, and
sets the viewscreen having a curved shape corresponding to the eyepiece lens.

4. The image transmission device according to claim 1, wherein

the at least one processor
acquires the color information at higher density when the angle with respect to the center axis is smaller.

5. The image transmission device according to claim 2, wherein

the at least one processor
creates, in addition to a main image that is created using the viewscreen having the center axis corresponding to the visual line, a sub-image that, using a viewscreen having a different center axis, indicates the space of a same time in a different visual field, and
transmits, as the source image data, data concerning one rectangular region in which the main image and the sub-image of a smaller size than the main image are presented.

6. The image transmission device according to claim 5, wherein

the at least one processor
creates the sub-image by using the viewscreen having a center axis in an opposite direction with respect to the center axis corresponding to the visual line.

7. The image transmission device according to claim 5, wherein

the at least one processor
creates the main image and the sub-image by using the viewscreen that has a curved shape, and
presents, at four corners of the rectangular region circumscribing the main image, four partial images that are obtained by dividing the sub-image into two parts in a longitudinal direction and dividing each of the parts into two parts in a lateral direction.

8. The image transmission device according to claim 5, wherein

the at least one processor
changes, only for the main image, the interval between the directions in which the color information is acquired.

9. The image transmission device according to claim 1, wherein

the at least one processor
transmits the source image data at a rate lower than a display frame rate.

10. The image transmission device according to claim 1, wherein

the at least one processor
creates layered-structure data expressing the source image with multiple resolutions, and
transmits data concerning a layer requested by the device that creates the display image.

11. An image transmission device that, in parallel with displaying, transmits source image data for use in creating a display image, the image transmission device comprising:

at least one processor having hardware, wherein
the at least one processor
acquires information regarding a user visual line,
creates a main image that is created using a curved viewscreen having a center axis corresponding to the visual line, and a sub-image that, using a curved viewscreen having a different center axis, indicates a space of a same time in a different visual field, and
transmits, to a device that creates the display image, the source image data in which four partial images that are obtained by dividing the sub-image into two parts in a longitudinal direction and dividing each of the parts into two parts in a lateral direction are presented at four corners of a rectangular region circumscribing the main image.

12. An image transmission method of, in parallel with displaying, transmitting source image data for use in creating a display image, the method comprising:

creating the source image by acquiring color information in each corresponding direction in a space to be displayed and determining values of respective pixels on a viewscreen for the source image in such a way that the color information is acquired after an interval between the directions is so changed as to depend on an angle with respect to a center axis of the viewscreen; and
transmitting the source image data to a device that creates the display image.

13. A recording medium having a program recorded therein for causing a computer that, in parallel with displaying, transmits source image data for use in creating a display image, to implement:

a function of creating the source image by acquiring color information in each corresponding direction in a space to be displayed and determining values of respective pixels on a viewscreen for the source image in such a way that the color information is acquired after an interval between the directions is so changed as to depend on an angle with respect to a center axis of the viewscreen; and
a function of transmitting the source image data to a device that creates the display image.

FIG.1

IMAGE TRANSMISSION
DEVICE

20

1

8

10c

10a

16a

DISPLAY CONTROL DEVICE

14c, 16c

10b

14a

DISPLAY CONTROL DEVICE

14b, 16b

EP 4 550 798 A1

# FIG.2

EP 4 550 798 A1

# FIG.3

# FIG.4

# F I G . 5

EP 4 550 798 A1

EP 4 550 798 A1

FIG.7

FIG.8

vec3 **nor** (vec3 **rd**)

194

184

th

v

u

(a)

f (th)

320b

320a

th

(b)

EP 4 550 798 A1

F I G . 9

# FIG.10

200

202

206

204a

204b

208

210

EP 4 550 798 A1

# FIG.11

FIG.12

# FIG.13

EP 4 550 798 A1

## INTERNATIONAL SEARCH REPORT

International application No.

**PCT/JP2022/026211**

### A. CLASSIFICATION OF SUBJECT MATTER

*H04N 21/234*(2011.01)i; *H04N 13/00*(2018.01)i; *H04N 21/2662*(2011.01)i; *H04N 21/431*(2011.01)i
FI:   H04N21/234; H04N21/2662; H04N21/431; H04N13/00

According to International Patent Classification (IPC) or to both national classification and IPC

### B. FIELDS SEARCHED

Minimum documentation searched (classification system followed by classification symbols)

H04N21/234; H04N13/00; H04N21/2662; H04N21/431

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-057766 A (SONY INTERACTIVE ENTERTAINMENT LIMITED LIABILITY COMPANY) 08 April 2021 (2021-04-08)<br>paragraphs [0005], [0100] | 1-13 |
| A | JP 2020-129823 A (RICOH COMPANY, LIMITED) 27 August 2020 (2020-08-27)<br>entire text, all drawings | 1-13 |
| A | JP 2016-149736 A (RICOH COMPANY, LIMITED) 18 August 2016 (2016-08-18)<br>entire text, all drawings | 1-13 |
| A | JP 2017-098921 A (CANON INCORPORATED) 01 August 2017 (2017-08-01)<br>entire text, all drawings | 1-13 |
| A | WO 2004/036498 A1 (SEIKO EPSON CORPORATION) 29 April 2004 (2004-04-29)<br>entire text, all drawings | 1-13 |
| A | US 2018/0374192 A1 (DOLBY LABORATORIES LICENSING CORPORATION) 27 December 2018 (2018-12-27)<br>entire text, all drawings | 1-13 |

☐ Further documents are listed in the continuation of Box C.  ☑ See patent family annex.

| | |
|---|---|
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **05 August 2022** | **23 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/026211**

| Patent document cited in search report | | | Publication date (day/month/year) | Patent family member(s) | | | Publication date (day/month/year) |
|---|---|---|---|---|---|---|---|
| JP | 2021-057766 | A | 08 April 2021 | (Family: none) | | | |
| JP | 2020-129823 | A | 27 August 2020 | US | 2017/0116704 | A1 | |
| | | | | entire text, all drawings | | | |
| | | | | EP | 3182696 | A1 | |
| | | | | KR | 10-2019-0031343 | A | |
| | | | | CN | 108876714 | A | |
| JP | 2016-149736 | A | 18 August 2016 | US | 2016/0234438 | A1 | |
| | | | | entire text, all drawings | | | |
| | | | | EP | 3054414 | A1 | |
| | | | | CN | 105872354 | A | |
| JP | 2017-098921 | A | 01 August 2017 | (Family: none) | | | |
| WO | 2004/036498 | A1 | 29 April 2004 | US | 2006/0062487 | A1 | |
| | | | | entire text, all drawings | | | |
| | | | | EP | 1553521 | A1 | |
| | | | | CN | 1703725 | A | |
| US | 2018/0374192 | A1 | 27 December 2018 | WO | 2017/116952 | A1 | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Perceptual rasterization for head-mounted display image synthesis. **TOBAIS RITSCHEL**. Transactions on Graphics. ACM, January 2019, vol. 38